# EUROPEAN PATENT APPLICATION

(11) **EP 1 884 339 A1**
(43) Date of publication of application: **06.02.2008**
(21) Application number: 06425562.3
(22) Date of filing: 03.08.2006
(51) Int. Cl.: B29C 47/50, B29C 47/92, B29C 45/04, B29C 33/36

(54) **Process and apparatus for extrusion moulding**

(71) Applicant: GM Inox S.r.l., 21026 Gavirate (VA) (IT)
(72) Inventor: Rossi, Alberto, 21026 Gavirate (VA) (IT); Morini, Matteo, 21026 Gavirate (VA) (IT)
(74) Representative: Gislon, Gabriele

(57) **Abstract**

A process for molding thermoplastic products in closed cavity molds, in which the thermoplastic material is extruded continuously from an extruder, is fed to a feed unit (10) comprising a plurality of injection nozzles (12), and is injected, without interruption of extruder operation, into at least one of a plurality of molds (9) mounted on means (13-14) that position them in succession on the nozzles (12) so that, during operation of the extruder, there always is at least one mold (9) of said plurality of molds being filled.

## Description

The present invention relates to a process and to an apparatus for extrusion molding. More specifically, the invention relates to a process and to an apparatus for extrusion molding of thermoplastic articles in closed cavity molds.

Continuous extrusion molding processes are known in which the thermoplastic material is plasticized in a cylinder by means of one or more rotating screws that also have the function of pressurising the material and pushing it through a die, or extrusion head, to provide the required extruded product.

Continuous extrusion molding of this type therefore involves the use of an "open" mold, that is, a shaped cavity through which the thermoplastic delivered from the extruder passes and which reproduces the shape thereof.

The problem with conventional extrusion processes is that they require subsequent processing of the extruded product, typically by cutting and finishing the extruded product.

Extrusion blow-molding is known, in which the material is extruded in the form of a tube in a "closed" mold and subsequently blown to give a hollow product reproducing the shape of the mold.

Intermittent extrusion molding is known and characterized by two steps: the first, during which the material is extruded with a continuous flow in the "closed" mold, until said mold is filled; the second, during which the flow of thermoplastic produced by the extruder is stopped. With this process the flow of thermoplastic takes place in alternating cyclic steps.

The process is known to obtain thermoplastic articles through injection molding.

An extrusion process is known, in which the cylindrical extruded article is closed between two half-molds mounted on opposing carousels that separate automatically after a distance travelled together. A series of gates or moving blades cut the extruded product to size. In this embodiment, therefore, the extrusion head delivers the extruded product into a moving mold which divides into a plurality of cavities aligned by means of the moving blades, until it opens completely and separates into two half-molds.

This solution has substantially the same drawbacks as conventional extrusion, for example the cutting step and the fact that it is impossible to mold shapes substantially more complex that those of an article with a regular shape. Moreover, the apparatus required is unavoidably bulky, as it must extend in length for a time sufficient to allow cooling of the piece present in the mold before opening thereof; similarly, the production speed is limited by the speed of the molds along the carousel, said speed in turn being dependent on the cooling speed of the piece in the mold.

The object of the present invention is to solve the aforesaid problems and to provide a process and apparatus that allow continuous molding at high speed also of pieces with complex shapes.

This object is attained by means of the invention which involves a process for extrusion molding of individual pieces characterized according to claim 1.

According to one aspect of the invention, the extruder is operated continuously and preferably with a constant pressure and flow rate; for this purpose, the pressure of the material delivered from the extruder is increased or stabilized before feeding the material to the injection nozzles.

According to another aspect of the invention, the process involves feeding to the molding extruder metered quantities of the individual raw materials, that is, thermoplastic material (i.e. in powder), fillers, colorants, additives, plasticizers and similar products to directly produce the desired product without passing through the granulation step. In other words, the invention makes it possible to exclude the granulation step of the plastic material, which is a step that must instead always be performed separately before any injection molding process.

The invention also relates to an apparatus according to claim 6.

According to the invention, at least two molds are present, of which at least one is always in position on one of the injection nozzles.

Means to pressurize the thermoplastic material are preferably present, positioned between the extruder and the feed unit, to increase and/or stabilize the pressure of the material delivered from said extruder before feeding it to the nozzles that inject it into the molds. Means suitable for this purpose are, for example, melt pumps.

According to another aspect of the invention, pressure sensors are present connected to a control unit and to a drive unit of the melt pump motor and of the extruder motor to obtain a constant pressure of the molten material fed to the nozzles.

According to another aspect of the invention, the extruder is equipped with a plurality of feed and metering means for the individual materials to be molded, that is, for the powdered thermoplastic, the filler, the additives, the pigments (masterbatches) and the like.

As mentioned above, the invention allows molding of finished pieces in closed cavity molds of the type utilizable for injection molding, thereby obtaining pieces that have the desired shape and that do not have to undergo further cutting or other processing to reach the desired shape.

According to a further aspect of the invention, the molds are mounted on two or more kinematic mechanisms that carry the molds in succession to the nozzles, so that at least one mold is always in this position. In this way, while the mold in position is being filled, one or more molds are in the standby or positioning step; as soon as the filling step is finished, feed is transferred to the other mold (formerly in the standby or positioning step) which is now filled and the already filled mold is moved towards a station for ejection of the molded piece. A new empty mold is carried to the free nozzle and put in stand-by.

In this way the extruder can operate continuously, preferably at constant speed, thereby differing from prior art.

The invention consequently makes it possible to utilize a process for extrusion molding by means of injection nozzles in closed cavity molds and with all the advantages deriving from the use of an extruder in place of an injection press, obtaining finished pieces that have all the advantages of the injection molded piece.

It is possible to utilize two or more extruders on the same apparatus, for example to co-extrude different materials or the same material with different colours. Two or more extruders can also be used to mold in two different positions along the periphery of the rotating kinematic mechanisms.

A further advantage is that it is possible to obtain molded pieces, which were previously only obtainable by injection molding, starting from base materials, that is from the thermoplastic material, the fillers and the powder additives or masterbatches. In fact, thanks to the present invention the piece can be molded directly from the extruder that plasticized, metered and mixed the initial materials, without requiring to produce the granulate to be subsequently fed to an injection press.

The invention will now be described in greater detail with reference to the drawings provided by way of a non-limiting example, in which:
- Figure 1 is a schematic side view of the apparatus according to the invention;
- Figure 2 is a schematic top view of the apparatus in Figure 1;
- Figure 3 is a top view of the rotating tables and of the unit that operates them;
- Figures 4-8 are side and partially sectional views of elements forming the feed unit;
- Figure 9 is a schematic view of the system to control the pressure of the apparatus according to the present invention.

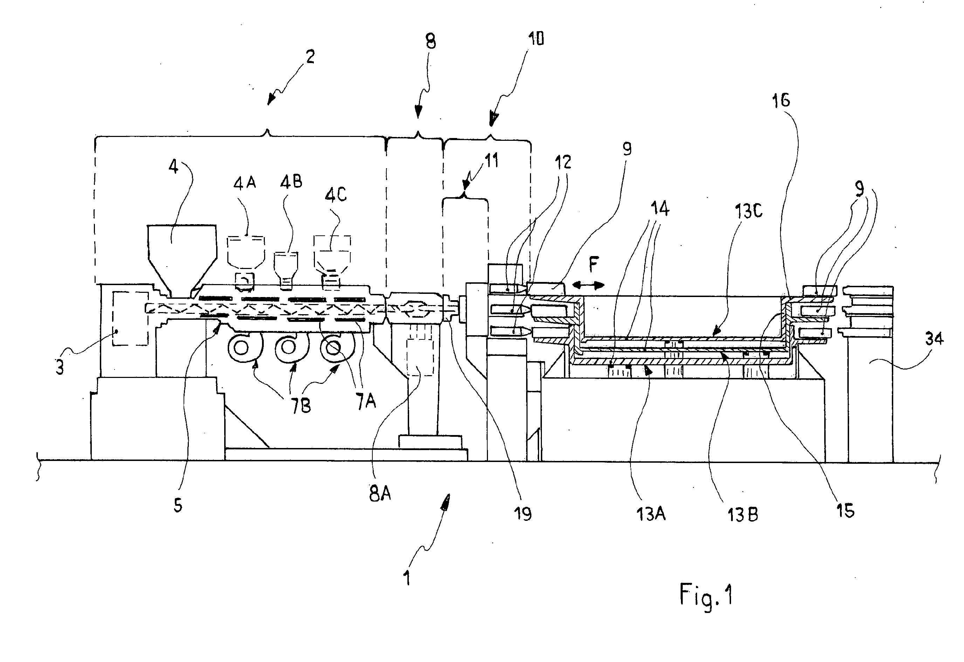

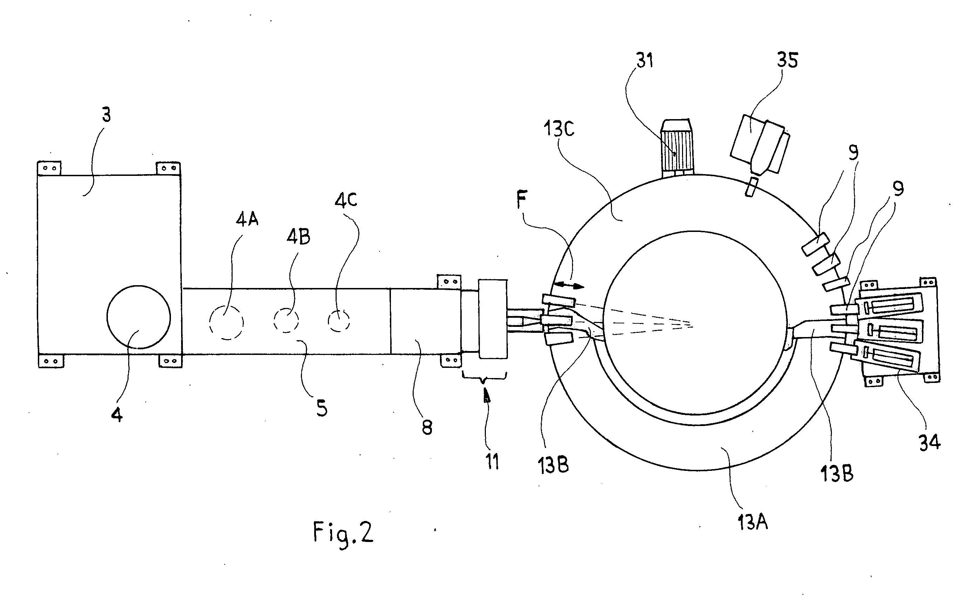

With initial reference to Figure 1 and to Figure 2, the apparatus 1, or system, for extrusion molding of elements in thermoplastic material, comprises at least one extruder 2 in which said thermoplastic material is taken to a plastic state in a way known per se in the art. As shown, the extruder 2 comprises a motor 3, a hopper 4 to feed the thermoplastic material to the extruder and a conduit 5 in which one (or more) plasticizing screws 6 are present.

Conduit 5 is temperature controlled in a known way, for example by heating means 7A and cooling means 7B. Extruders suitable for the purpose are normally available on the market and are of the single screw/two screw type, for example the extruders produced by the firm Costruzioni Meccaniche Luigi Bandera spa.

As mentioned previously, in alternative to a conventional hopper to feed granules already comprising fillers and various additives, the extruder 2 can be equipped with metering means to feed the initial materials thereto: in other words, in this embodiment of the invention, the extruder (preferably a two-screw extruder) mixes the initial materials and produces the molten material which, upon delivery from the extruder, is carried to said plurality of nozzles 12 and from these injected into the molds 9. Extruders of the aforesaid type, i.e. provided with means to feed controlled quantities of the initial materials to obtain the thermoplastic product with the desired composition upon delivery, are known in the art and are normally utilized to produce compounds, generally in the form of granules or pellets, having the desired formulation. This embodiment is indicated in Figure 1 and in Figure 2, by means of the references 4A-4C, with a dashed line.

The outlet of the extruder 2 is connected with means to pressurize the thermoplastic material, positioned between said extruder 2 and the molds 9 feeding unit 10 to increase and/or stabilize the pressure of the material delivered from extruder 2. The purpose of means 8 is to increase and/or stabilize the pressure of the material delivered from the extruder 2 to a known value, constant and sufficient to fill the molds 9 according to the desired quantities.

Means suitable for this purpose are, for example, "melt pumps" such as those marketed by the firm Farcon. Typical values of the pressure of the material in the extruder 2 are within the range from 30 bar to 200 bar, and the value of the pressure reached by the melt pump generally is in the range from 100 bar to 250 bar. The pump 8 is operated by a variable speed brushless motor 8A. The motor 8A is preferably equipped with an encoder or similar means to determine and control the speed thereof.

As mentioned above, the melt pump 8 is connected to a feeding unit 10, comprising a flow diverter 11 of the material and a plurality of injection nozzles 12.

Also present are a plurality of molds 9 and means to position one or more of said molds on the nozzles in succession, that is, to bring the molds 9 in alignment with said nozzles 12 and connect them to each other, so that, during operation of the extruder, at least one of said plurality of molds is always in the filling step and a second mold is already in the positioning step or already connected to another injection nozzle ready to be filled.

Means of any type can be used, such as turntable, carousel, chain or pallet conveyors; in the embodiment shown, relative to production of thermoplastic articles of small dimensions, the molds are mounted on three rotating tables coaxial with one another.

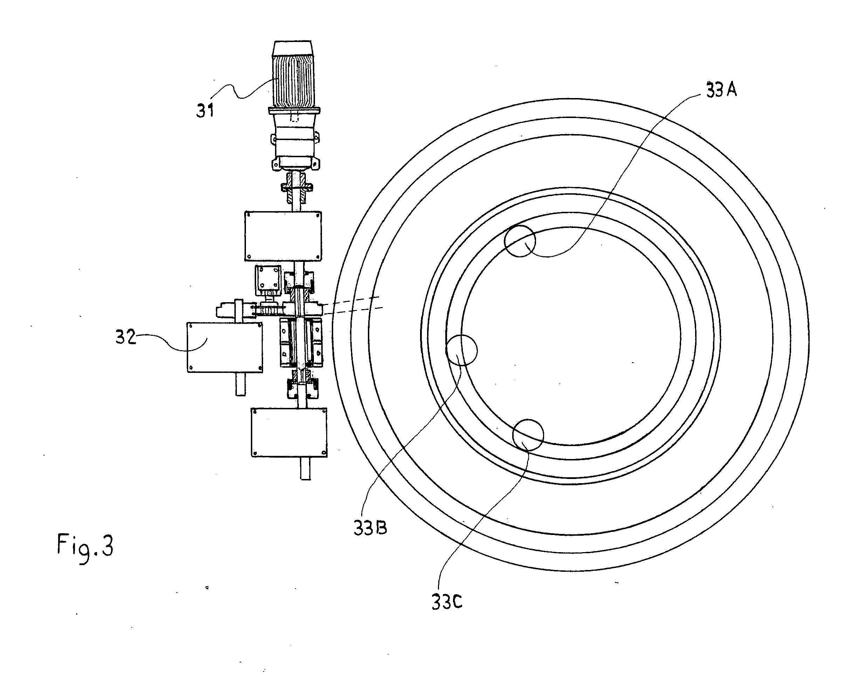

The embodiment shown in Figures 1-3 has three coaxial and superimposed tables 13A-13B-13C. The molds 9 are positioned radially on the periphery of the tables and are spaced apart by an angle that depends on their dimensions, on the number of supporting tables and on the times set by the cooling cycle.

As can be seen from the figures, molds 9 are positioned on brackets located on different levels, that is, staggered vertically. Moreover, molds 9 are mounted on carriages or similar means that allow a translatory movement along the axis thereof, as shown by the arrow F in Figures 1 and 2, so that they can be brought into connection with nozzles 12 for the entire time that said nozzles inject material into the mold.

Nozzles 12 are of the type known in the art, such as the Fuchslocher nozzle marketed by Thermec Italia, and are mounted on a supporting unit 17, on different levels corresponding to the levels of the brackets 16 of tables 13A-13B-13C. Associated with nozzles 12 are means to engage and retain the molds, such as grippers or similar gripping (or pushing) means that grasp the mold 9 once it has been taken to the standby position and move it towards the nozzle 12 and retain it there for the entire filling step thereof.

As mentioned above, the material delivered from the extruder 5 is fed to the melt pump 8 and from this it is taken to nozzles 12 by means of the flow diverter 11. The diverter unit 11 comprises two or more feed channels (three in the embodiment shown, which refers to an apparatus with three nozzles) which extend from the outlet of pump 8 to the inlet of each nozzle 12, and have characteristics that make it possible to avoid different load losses of the material from one nozzle to the other and which thereby guarantee even filling of the molds regardless of the nozzle to which the molds are connected. In other words, the unit 11 must keep the pressure of the material at a constant value in all the conduits, until reaching the molds. In this way it is possible, if necessary, for example when working with material containing an expanding agent, to regulate the amount of product injected into each mold according to the pressure and to the injection time.

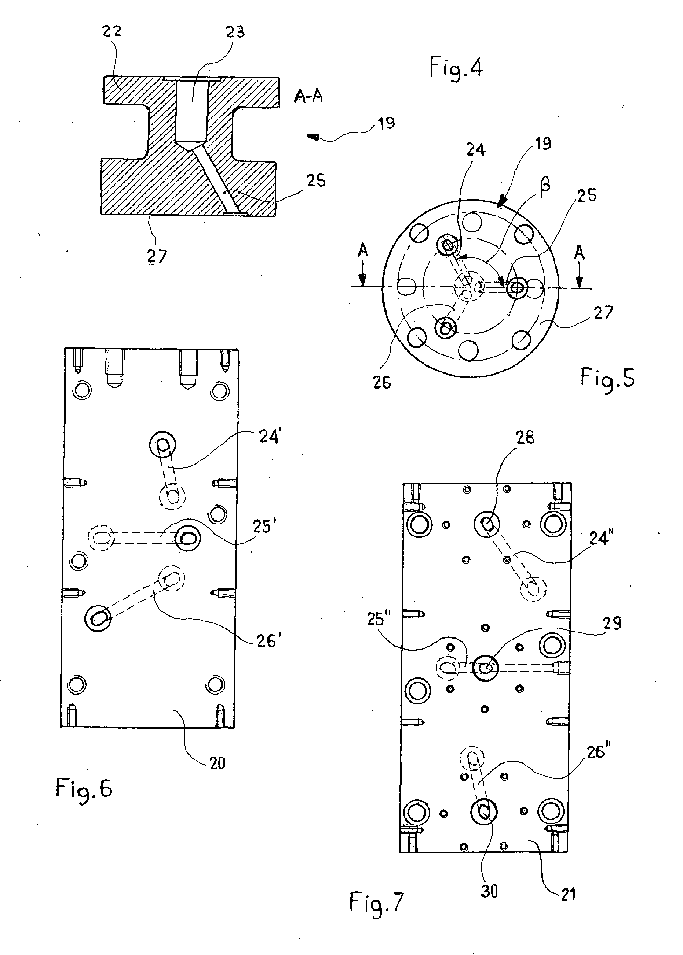

Figures 4-8 show a diverter unit designed to feed three nozzles for three molds identical to one another; in other words, the quantities of material supplied by each nozzle must be identical to one another for all three nozzles. The load losses for each conduit of the diverter unit must, obviously, be the same.

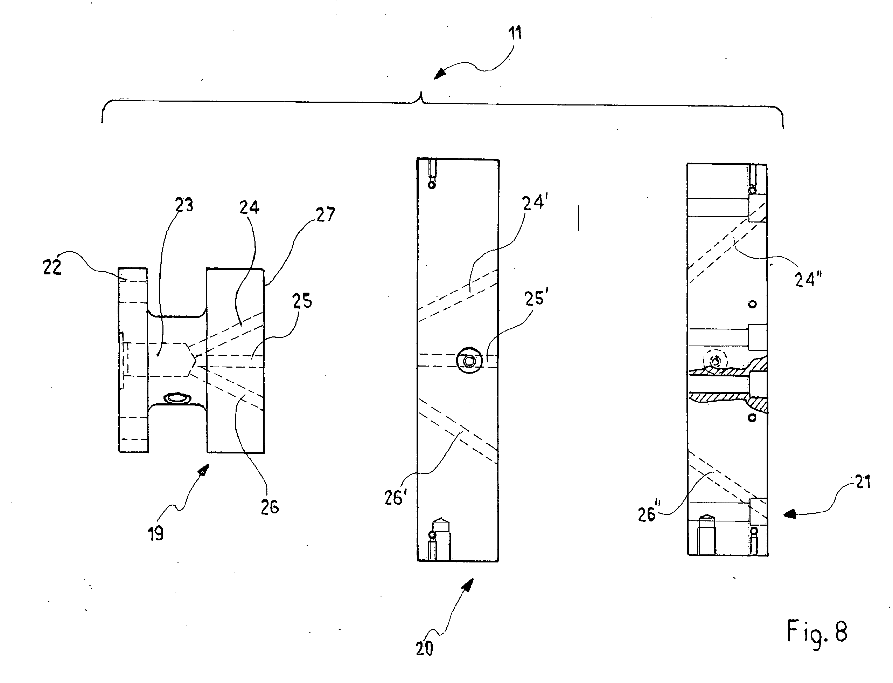

The diverter unit 11 comprises (as shown in the exploded view in Figure 8) three separate elements 19-21 which can be coupled together. The first element 19 is placed at the outlet of the pump 8 and is fixed thereto with a flange 22; as is also visible in Figures 4 and 5, the element 19 has an inlet conduit 23 which branches into three conduits 24-26 that diverge and have corresponding outlet holes at the flanged end 27, opposite to flange 22. The angle β between one conduit and the other (Figure 5), or between one outlet hole and the other, is 120°.

The outlets of conduits 24-26 on face 27 are in communication with extensions 24'-26' of said conduits through the second element 20 of the diverter unit. As can be seen in Figure 6, the extension of the conduits no longer follows the development of element 19, but follows different angles which, in combination with the subsequent third element 21 and the relative conduits 24"-26", aligns the three final outlet holes vertically with one another (Figure 7). The respective mold feeding nozzles are connected to outlet holes 28-30.

As already mentioned, the diameters and lengths of the three conduits formed by the sections 24/24'/24" - 26/26'/26" are identical as intended to feed identical molds; in other embodiments of the invention, the molds 9 of each unit of those present (i.e. present on each table) can differ and require the feed of different quantities of material. In this case, the conduits of the diverter unit will be designed with different sections and/or lengths to give load loss values which are in any case identical for each conduit.

A further characteristic of the invention is the fact that the diverter-distributor unit 11 described above has no valves of any type, the only means to stop the flow of thermoplastic material being present in the nozzles 12.

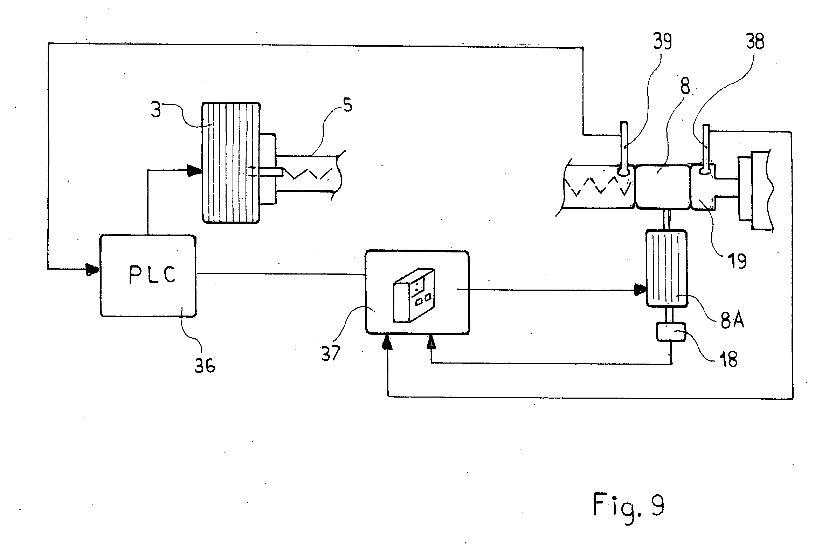

Figure 9 shows a diagram of the system to control the apparatus according to the present invention, which makes it possible to obtain the required constant pressure of the material fed to the nozzles 12.

Obtaining a constant pressure is particularly useful as, together with control of nozzle opening time, it allows very accurate and simple metering of the quantity of material fed to the mold, provided that the aforesaid load losses along the diverter/distributor 11 are identical in each duct. In this way it is not necessary to use control software that calculate all the other variables such as load loss, variations in flow at the nozzle outlet and the like.

As shown in Figure 9, the system according to the invention comprises a system to control the pressure delivered from the pump 8 of the closed loop type, and an open loop control system for the pressure of the material delivered from the conduit 5 of the extruder 2. The closed loop control of the pressure delivered from the pump comprises a PLC or similar control unit 36, a drive 37 and a probe or pressure sensor 38 placed on the initial element 19 of the diverter 11, preferably upstream of the point in which the various conduits of the diverter branch off.

The probe 38 to measure the pressure on 19 is connected to the drive 37, which is in turn connected to motor 8A of pump 8 to control the operating parameters thereof. The motor 8A is a variable speed brushless motor with microsecond response, and is provided with an encoder 18 which is connected to the drive 37 to send signals relative to the motor speed values thereto.

The probe 38 is a probe substantially capable of continuously detecting the pressure value of the molten material delivered from the pump 8. Suitable probes are, for example, those marketed by DYNISCO, which are capable of taking a reading every 5 milliseconds.

Operation takes places as follows:
the probe measures the pressure in 19 every 5 msec and sends the corresponding signal to the drive 37, which detects the value delivered by the probe, consequently calculates the voltage and amperage to give to the motor 8A to reach the required speed and therefore the required pressure, which is the value set (i.e. 250 bar) by the operator on the PLC 36.

In the meantime, the encoder 18 detects the effective speed of the motor 8A and sends a corresponding signal to the drive 37, which verifies whether the speed of the motor is the speed required to obtain the pressure required. If the speed of the motor is not correct, the drive 37 varies the operating parameters of the motor, voltage and amperage, to make the required corrections. Probe 38 and encoder 18 therefore collaborate with the drive 37 to regulate the speed of the motor 8A of the pump 8 until obtaining the required pressure (250 bar). Control of extruder operation takes place with an open loop system comprising a probe 39 placed at the outlet of the conduit 5, upstream of the pump 8, to measure the pressure of the molten material delivered from the extruder; this probe or pressure sensor is similar to the one described above and is connected to the PLC 36 which is connected to the motor 3 of the extruder.

The probe 39 detects the pressure at the extruder outlet, generates a corresponding signal and sends it to the PLC 36, where the pressure at the extruder outlet, i.e. 50 bar, has been set. The PLC receives the pressure values and sends corresponding instructions to the motor of the extruder to maintain or modify the effective speed of the motor as a function of the speed required for the set pressure. In this case there is no feedback and the system is of the open loop type.

Continuing with the previous example, if the pressure set for the outlet of the extruder (probe 39) is 50 bar and the pressure at the outlet of the pump is set to 250 bar, the extruder 2 is consequently regulated by the PLC 36 to reach a pressure of 50 bar and the pump 8 increases the pressure to 250 bar.

If instead the pressure at the probe 39 is set to 250 bar, the pump 8 will merely stabilize this value and guarantee constancy through time. For this purpose, it is also possible for the pump 8 to decrease the pressure delivered from the extruder by rotating at very low speeds.

If required, it is also possible to fit means for connection to a pressurized gas source with the function of expanding agent to the element 19.

Returning now to Figures 1-3, the tables 13A-13C are made to rotate by means of a drive unit comprising a motor 31, three index drives 32 and a plurality of pinions (three in the embodiment shown) 33A-33C to transmit motion to the tables in a known way, i.e. through pulleys. The index drives are of the type available (i.e. manufactured by the company Colombo e Filippetti) and have operating characteristics dictated by the type of molds present and by the type of molding.

The tables are supported on top of one another by means of bearings to provide rolling friction.

The apparatus 1 according to the invention also comprises (Figures 1 and 2) a unit 34 to eject the products from the molds 9 and a unit to remove swarf from said molds.

During operation, the thermoplastic material fed from the hopper 4 is taken to a plastic state in the conduit 5 by the screw 6 of the extruder and is then fed to the feed unit 10 comprising the flow distributor/diverter 11 and a plurality of injection nozzles 12.

Preferably, the material delivered from the conduit of the extruder is made to pass through a pump 8 or analogous means to increase and/or stabilize the pressure value of the material delivered from the extruder before feeding it to the nozzles 12.

Through the diverter-distributor 11, the flow of material is divided in two or more flows (three in the preferred embodiment shown) and taken to the nozzles 12. The conduits passing through the diverter-distributor 11 have characteristics that prevent the product from remaining in the conduit (which is heated to keep the product fluid) beyond the maximum dwell time possible without deteriorating. In other words, the dwell times of the material in the various conduits of said feed unit are below the deterioration time of said material.

In order for the extruder 2 to be operated in continuous operating mode and preferably at constant pressure, at all times of its operation at least one of the molds 9 is positioned at the nozzles 12.

In particular, during the filling of a mold (i.e. on the upper table 13C) at least one mold on the tables 13A or 13B is positioned or is in the stand-by position, connected to the respective nozzle 12 by the retaining means in Figure 9.

When the mold on the table 13C has been filled, the corresponding nozzle closes and the nozzle connected to the mold for example on table 13B opens, while the table 13C is rotated to carry a further mold in alignment with the nozzle that has just become free. Similarly, after the mold on the table 13B has been filled, the mold on the table 13A will be filled and the cycle is repeated again.

## Claims

1. A process for extrusion molding of elements in thermoplastic material, wherein said thermoplastic material is taken to a plastic state in a cylinder, by means of one or more rotating screws, of the extruder (2) and is then extruded continuously from said extruder, **characterized in that** it comprises the steps of feeding said thermoplastic material delivered from the extruder to a feeding unit (10) comprising a plurality of injection nozzles (12), and of injecting said material into at least one of a plurality of molds (9), without interruption of extruder operation, said molds being mounted on means (13-14) that position them on said nozzles (12) in succession so that, during operation of the extruder, there always is at least one mold (9) of said plurality of molds being filled with said material.

2. A process as claimed in claim 1, wherein said thermoplastic material delivered from said extruder (2) is fed through means (8) to increase and/or stabilize the pressure of said material before feeding it to said injection nozzles (12).

3. A process as claimed in claim 1 or 2, wherein said extruder is operated at constant pressure.

4. A process as claimed in claim 2 or 3, further comprising the steps of detecting the pressure of the material delivered from said means (8) to increase and/or stabilize the pressure of the material, detecting the motor speed (8A) of said means (8), sending said signals to drive means (37) and regulating the speed of said motor (8) as a function of the pressure detected to obtain the desired pressure.

5. A process as claimed in one of the previous claims, wherein the flow rate of said extruder (2) is regulated to obtain dwell times of the material in said feeding unit (10) shorter than the degradation time of said material.

6. An apparatus for extrusion molding of elements in thermoplastic material, comprising at least an extruder (2) where said thermoplastic material is plasticized, **characterized in that** it also comprises a feeding unit (10) comprising a plurality of injection nozzles (12), a plurality of molds (9) and means to position one or more of said molds on said nozzles in succession so that, during operation of the extruder, there always is at least one mold of said plurality of molds being filled with said material.

7. An apparatus as claimed in claim 6, further comprising means (8) to pressurize and/or stabilize the thermoplastic material, positioned between said extruder (2) and said feeding unit (10), to increase and/or stabilize the pressure of the material delivered from said extruder (2) to said feeding unit.

8. An apparatus as claimed in claim 7, wherein said pressurizing and/or stabilizing means (8) comprise a melt pump and a motor (8A) for said pump.

9. An apparatus as claimed in one of claims 6 to 8, further comprising means (38) to detect the pressure of the material delivered from said means (8) to increase and/or stabilize the pressure of the material; means (18) to detect the speed of the motor (8A) of said means (8), drive means (37) of said motor (8A) to receive said signals and to regulate the speed of said motor (8) as a function of the pressure detected to obtain the pressure desired for said material.

10. An apparatus as claimed in one of claims 6 to 9, wherein said injection nozzles are staggered in position.

11. An apparatus as claimed in one or claims 6 to 10, wherein said feeding unit (10) comprises two or more feeding channels.

12. An apparatus as claimed in one of claims 6 to 11, further comprising means to engage and retain a mold in contact with the respective nozzle during said standby or filling step.

13. An apparatus as claimed in one of claims 6 to 12, further comprising a plurality of metering means (4-4C) of the material required for the thermoplastic composition to be injected into said molds (9), said metering means being connected to said extrusion cylinder (5).
